(19) **Europäisches Patentamt**

**European Patent Office**

**Office européen des brevets**

(11) **EP 1 142 626 B1**

(12) **EUROPEAN PATENT SPECIFICATION**

(45) Date of publication and mention
of the grant of the patent:
**30.06.2004 Bulletin 2004/27**

(51) Int Cl.[7]: **B01D 53/46**, B01D 53/50

(21) Application number: **01111677.9**

(22) Date of filing: **15.03.1996**

(54) **Combustion exhaust gas treatment apparatus**

Vorrichtung zur Behandlung von Abgasen aus Verbrennungsanlagen

Dispositif pour le traitement des gaz de combustion

(84) Designated Contracting States:
**DE DK ES GB IT**

(30) Priority: **30.03.1995 JP 7277895**
**30.03.1995 JP 7277995**

(43) Date of publication of application:
**10.10.2001 Bulletin 2001/41**

(62) Document number(s) of the earlier application(s) in
accordance with Art. 76 EPC:
**96104165.4 / 0 734 754**

(73) Proprietor: **MITSUBISHI JUKOGYO KABUSHIKI
KAISHA
Tokyo (JP)**

(72) Inventors:
• **Shimizu, Taku
Chiyoda-ku, Tokyo (JP)**
• **Kimura, Kazuaki
Chiyoda-ku, Tokyo (JP)**
• **Okazoe, Kiyoshi
Chiyoda-ku, Tokyo (JP)**
• **Tatani, Atsushi
Chiyoda-ku, Tokyo (JP)**
• **Ukawa, Naohiko,
Nishi-ku Hiroshima-shi, Hiroshima-ken (JP)**
• **Hino, Masao
Nishi-ku Hiroshima-shi, Hiroshima-ken (JP)**
• **Okino, Susumu,
Nishi-ku Hiroshima-shi, Hiroshima-ken (JP)**
• **Haruki, Takashi
Nishi-ku Hiroshima-shi, Hiroshima-ken (JP)**
• **Takashina, Toru
Nishi-ku Hiroshima-shi, Hiroshima-ken (JP)**

(74) Representative: **Behrens, Dieter, Dr.-Ing.
Wuesthoff & Wuesthoff
Patent- und Rechtsanwälte
Schweigerstrasse 2
81541 München (DE)**

(56) References cited:
**EP-A- 0 304 412        WO-A-89/08493
GB-A- 1 382 232**

**Description**

FIELD OF THE INVENTION AND RELATED ARTS

The present invention relates to a combustion exhaust gas treatment apparatus and method and more particularly to a combustion exhaust gas treatment apparatus and method capable of easily removing selenium (Se) from combustion exhaust gas containing sulfurous acid, dust and Se components, and making harmless the Se components.

Hitherto, a combustion exhaust gas treatment apparatus installed in a thermal power plant or the like, comprises a dust collector (usually an electrostatic precipitator) for removing fly ash and other dust from the combustion exhaust gas, and combustion exhaust gas desulfurization apparatus for absorbing sulfurous acid in the combustion exhaust gas is generally employed.

Moreover, conventionally, as the combustion exhaust gas treatment apparatus installed in a thermal power plant or the like, a combustion exhaust gas treatment apparatus is generally employed which comprises a dry dust collector (usually an electrostatic precipitator) for removing fly ash and other dust from the combustion exhaust gas, and a wet combustion exhaust gas desulfurization apparatus for absorbing sulfurous gas in the combustion exhaust gas by contacting it with an absorbent slurry (for example, slurry containing calcium compound) in an absorption column and separating and recovering gypsum as byproduct from the slurry in the absorption column.

Recently, handling of harmful impurities contained in the combustion exhaust gas aside from sulfur oxides is posing a problem. In particular, in the combustion exhaust gas treatment apparatus for coal fired boilers, the harmfulness of selenium (Se) contained at a maximum level of about 10 mg/kg in coal is a problem lately, and its harmless treatment is demanded.

Meanwhile, Se exists as tetravalent Se (main form: selenious acid $SeO_3^{2-}$) which is easy to treat by making it insoluble by a treating agent, and hexavalent Se (main form: selenic acid $SeO_4^{2-}$) which is hard to treat by making it insoluble, and in particular the hexavalent Se is high in solubility (solubility at 20°C is 95 %) and is easy to elute. Besides, this Se has a toxicity similar to that of arsenic compound, and disaster cases and emission regulations are known overseas, and it is newly added to the list of regulated items also in Japan, and is controlled by the environmental standard (0.01 mg/liter), discharge standard (0.1 mg/liter), and elution standard in landfill (0.3 mg/liter).

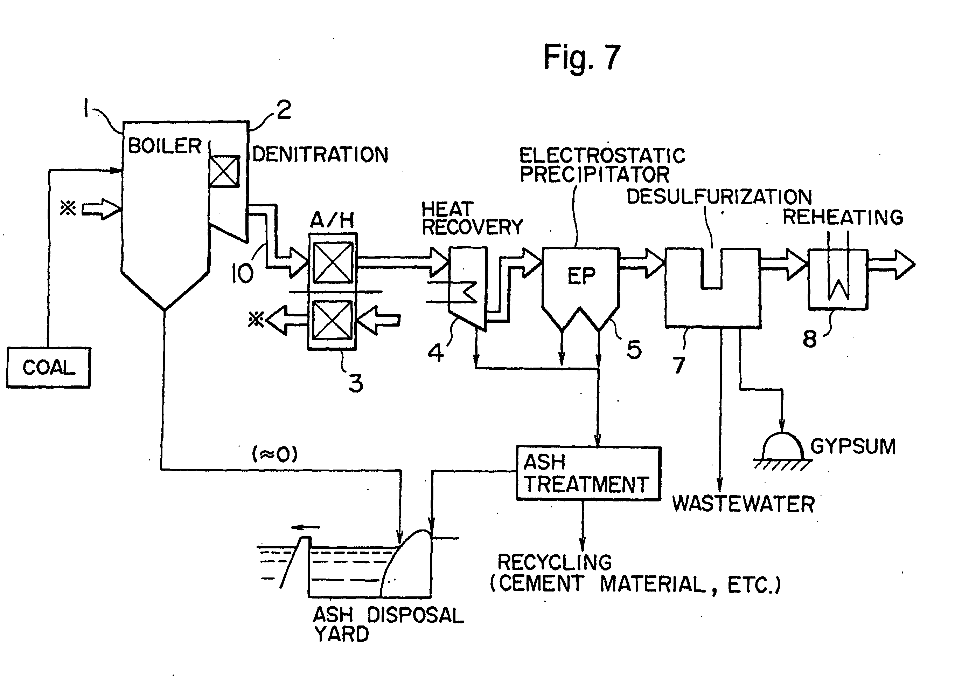

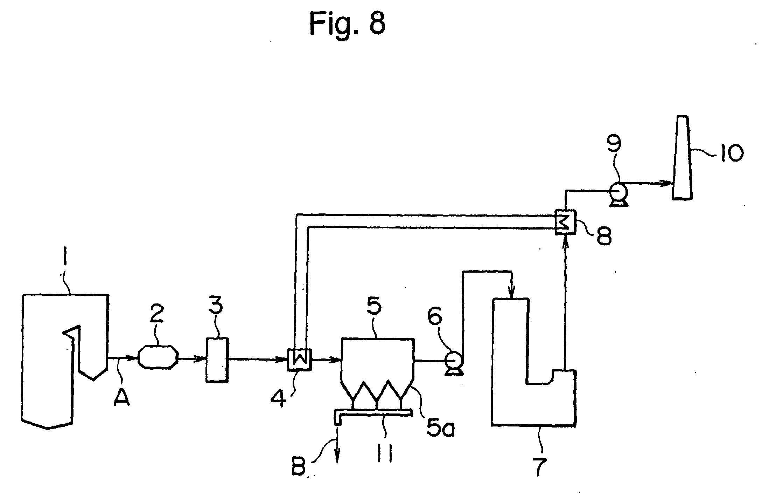

Fig. 7 shows an example of prior art of combustion exhaust gas treatment apparatus of this type (an example of combustion exhaust gas treatment apparatus for coal fired boiler). In Fig. 7 and Fig. 8, the combustion exhaust gas A emitted from a coal fired boiler 1 is sent into a denitration apparatus 2 installed downstream of the boiler 1 to be rid of nitrogen oxides (NOx), and passes through an air heater 3 and a heat recovery unit 4 of gas-gas heater (GGH), and is introduced into an electrostatic precipitator (EP) 5, in which fly ash and dust are removed. In succession, the combustion exhaust gas is guided into a wet combustion exhaust gas desulfurization apparatus 7 by a fan 6, and sulfurous gas is removed in this desulfurization apparatus 7, and after passing through a reheater 8 of the gas-gas heater (GGH), it is led into a stack 10 by a fan 9, and is released into the atmosphere through the stack 10 (Fig. 8).

On the other hand, fly ash and dust removed in the electrostatic precipitator 5 are discharged from plural hoppers 5a (dust recovery units) formed in the electrostatic precipitator 5, and are conveyed and collected in batch by a conveyor 11. Thus collected dust B is either recycled as cement material or the like, or discarded in an ash disposal yard (Fig. 7).

Herein, the desulfurization apparatus 7 comprises an absorption column, for example, in which combustion exhaust gas is introduced, and by contact of combustion exhaust gas with absorbent slurry (usually slurry containing calcium compound) in this absorption column, the sulfurous acid in the combustion exhaust gas is absorbed in a wet process. Usually from the slurry in the absorption column, gypsum is separated and collected as byproduct.

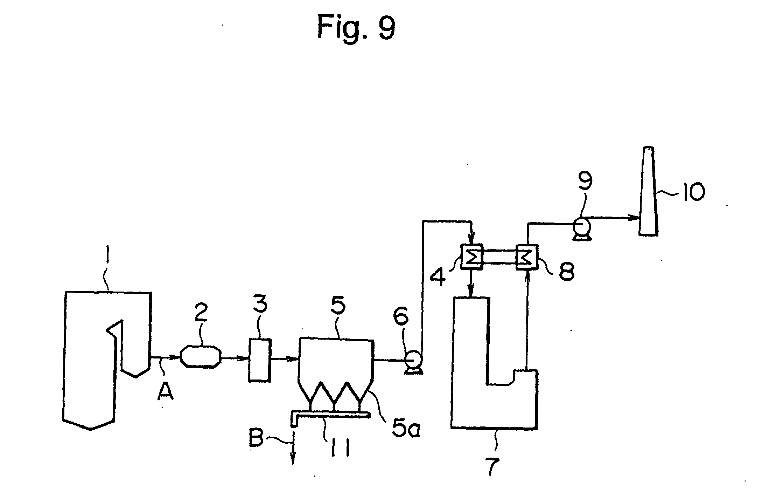

Incidentally, the heat recovery unit 4 of the gas-gas heater (GGH) may be also disposed immediately before the desulfurization apparatus 7 as shown in Fig. 9.

In these combustion exhaust gas treatment apparatuses, most of Se in coal (Se in combustion exhaust gas) is condensed at the downstream side of the air heater 3 (that is, the position before introduction into the electrostatic precipitator 5), and is removed by the electrostatic precipitator 5 in a state being contained in the dust in combustion exhaust gas, and is directly mixed in the refuse in the ash disposal yard or in the cement material. To render Se harmless by conforming to the elution standard, it requires a complicated and costly after-treatment of, for example, diluting the ash removed by the electrostatic precipitator 5 in a huge volume of water.

British Patent 1,382,232 describes a process for the recovery of selenium from waste combustion gas, particularly the waste gas from a glass melting furnace. Waste gases discharged from such furnaces contain a selenium component in the form of elemental selenium or a compound such as selenium dioxide. The selenium component is toxic and must be separated out and recovered in order to prevent atmospheric pollution. In order to achieve this separation a process is proposed which comprises a first step of contacting the waste gas having been cooled to about 250 - 300°C with an aqueous absorption solution comprising an alkali metal sulfite and/or an alkali metal bisulfite in an absorption tower so that at least a part of the selenium component is absorbed and the humidity of the gas is increased. The process further comprises a second step of passing the waste gas treated in the first step through a glass fiber filter (demister) kept in a moist condition to collect at least some of the remaining elemental selenium and selenium compound on the filter. In a third step acid, alpha acid H2SO4, is added to the absorption solution discharged from the first and second steps so as to reduce the selenium component dissolved in the absorption solution to elemental selenium which is precipitated from the solution and the elemental selenium so precipitated is recovered.

A method for separating mercury and selenium from roasting gases from roasting zinc concentrates is described in Erzmetall, 30(1977)12, pp 555-604. The method for separating mercury and selenium from exhaust gas includes introducing the exhaust gas from the roasting furnace for Zn-concentrate to a boiler, cooling and then separating the dust treated with an electric dust collector. For separating selenium calcium carbonate, $CaCO_3$, is added into the rinsed precipitate and then mercury is separated and subsequently water, $H_2SO_4$ and $SO_2$ are added. Such exhaust gas from the roasting furnace is different from combustion gas, especially of a thermal power plant.

OBJECTS AND SUMMARY OF THE INVENTION

In the light of the prior art, it is an object of the invention to present a combustion exhaust gas treatment apparatus capable of more easily removing and making harmless the Se components contained in combustion exhaust gas to the extent necessary to meet generally adopted environmental standards for the purity of combustion exhaust gas, in particular of thermal power plants.

An apparatus achieving this object and its preferred embodiments are defined in the appended claims.

Any combustion exhaust gas treatment apparatus of the invention comprises means for feeding a treating agent for making insoluble the tetravalent Se dissolved in the slurry. The treating agent for making tetravalent Se insoluble includes, for example, $FeCl_3$, $Fe_2(SO_4)_3$, chelating agent (e.g. Epolus MX-7 of Miyoshi Resin), and high molecular heavy metal capturing agent (e.g. Epofloc L-1 of Miyoshi Resin). The reaction of these treating agent for making insoluble tetravalent Se is described later.

In the combustion exhaust gas treatment apparatus of claim 5 most of Se in the combustion exhaust gas is removed by the dry dust collector in a state being included in the dust, and the dust contacts with water or liquid (solvent) in the repulping means, and is dissolved into the liquid in the process of forming into slurry. As the slurry forming liquid (solvent), aside from the water supplied from outside the apparatus, the treated water or slurry coming from each process in the apparatus may be used. Of the Se components dissolved in the dust slurry, at least tetravalent Se is made insoluble by treating agent. It can be discharged to the solid phase side by separating means (into dust cake). On the other hand, the filtrate separated by the separating means can be introduced into the slurry in the desulfurization apparatus. Accordingly, hexavalent Se that is also included in the combustion exhaust gas, if it is not made insoluble by the treating agent and is dissolved in the filtrate, most of the hexavalent Se is introduced into the slurry in the desulfurization apparatus, and reacts with the sulfurous acid absorbed from the combustion exhaust gas into the slurry, and is reduced to return to tetravalent Se.

Therefore, if hexavalent Se is contained in the combustion exhaust gas, in the stationary state, Se components dissolved in the slurry in the desulfurization apparatus or the circulation liquid composing this slurry are mainly tetravalent Se components; and in the wastewater treatment apparatus of claim 9 for treating discharge of circulating liquid of the desulfurization apparatus, only by making this tetravalent Se insoluble, the Se elution standard may be easily satisfied, and the desulfurization apparatus can be used as reduction reaction apparatus for hexavalent Se, so that the constitution of the entire apparatus may be simplified.

In the combustion exhaust gas treatment apparatus since part of the circulating liquid for composing the slurry of the desulfurization apparatus in the combustion exhaust gas treatment apparatus is used as solvent in the repulping means, as compared with the constitution of feeding water separately, the quantity (circulation) and consumption of water can be reduced.

In the combustion exhaust gas treatment apparatus of claim 7, since filter additive is charged into the mixing means or separating means, the dehydrating performance in the separating means is enhanced, and a solid matter (dust cake) low in moisture content and easy to handle is obtained. As the filter additive, gypsum used in the desulfurization process or the like may be used.

In the combustion exhaust gas treatment apparatus of (most of Se in combustion exhaust gas can be removed by the dry dust collector in a state being contained in the dust, and is directly led into the slurry in the desulfurization apparatus, repulped in the desulfurization apparatus, and mixed with a treating agent for making insoluble. Accordingly, at least tetravalent Se components of the Se components contained in the combustion exhaust gas are mostly made insoluble directly by the treating agent in the desulfurization apparatus, and mixed in the solid matter (gypsum, etc.) separated and formed from the slurry in the desulfurization apparatus and discharged, and the remaining Se components are also easily made insoluble and solidified by the insoluble treating agent in the wastewater treatment apparatus for treating discharge of circulating liquid in the desulfurization apparatus. Besides, if hexavalent Se components are contained in the combustion exhaust gas, most of hexavalent Se reacts with the sulfurous acid absorbed from the combustion exhaust gas in the slurry in the desulfurization apparatus to be reduced to change to tetravalent Se, which is also made insoluble by the treating agent in the desulfurization apparatus and is mixed into the solid matter (gypsum, etc.) separated and formed from the slurry in the desulfurization apparatus and discharged, or easily made insoluble and solidified in the wastewater treatment apparatus.

Therefore, in this treatment apparatus, too, the Se elution standard can be easily satisfied, and moreover since the desulfurization apparatus functions both as reducing reaction apparatus of hexavalent Se and as repulping means of dust, the constitution of the entire apparatus may be further simplified.

In the combustion exhaust gas treatment apparatus most of Se in combustion exhaust gas can be directly introduced into the desulfurization apparatus together with the combustion exhaust gas in a state being contained in dust, and is mixed into the absorbent slurry in, for example, the absorption column of the desulfurization apparatus, and is repulped and mixed with the treating agent. Accordingly, at least tetravalent Se components of the Se components contained in the combustion exhaust gas are mostly made insoluble directly by the treating agent in the desulfurization apparatus, and mixed in the solid matter (gypsum, etc.) separated and formed from the slurry in the desulfurization apparatus and discharged, or easily made insoluble and solidified by adding an insoluble treating agent in a wastewater treatment apparatus for treating discharge of circulating liquid in the desulfurization apparatus. Besides, if hexavalent Se components are contained in the combustion exhaust gas, most of hexavalent Se reacts with the sulfurous acid absorbed from the combustion exhaust gas in the slurry in the desulfurization apparatus to be reduced to change to tetravalent Se, which is also made insoluble by the treating agent in the desulfurization apparatus and is mixed into the solid matter (gypsum, etc.) separated and formed from the slurry in the desulfurization apparatus and discharged, or easily made insoluble and solidified in the wastewater treatment apparatus.

Therefore, in this treatment apparatus, too, the Se elution standard can be easily satisfied, and moreover since the desulfurization apparatus functions as the dust collector, reducing reaction apparatus of hexavalent Se, and repulping means of dust, the constitution of the entire apparatus may be further simplified, as compared with the constitution for installing the dust collector, repulping means and others separately.

In the combustion exhaust gas treatment apparatus of claim 8 the oxidation-reduction reaction control means controls the oxidation-reduction reaction in the desulfurization apparatus so that the hexavalent Se mixing in the slurry in the desulfurization apparatus may be reduced almost completely by sulfurous acid in the slurry to be tetravalent. Accordingly, if hexavalent Se is contained in the combustion exhaust gas, this hexavalent Se can be almost completely changed into tetravalent form in the desulfurization apparatus, so that the Se in the combustion exhaust gas may be made insoluble more easily and completely.

In the combustion exhaust gas treatment apparatus of claims 3 and 4 most of Se in combustion exhaust gas is removed by the dry dust collector in a state being contained in the dust, and is directly introduced into the liquid in the cooling and dust collecting column of the desulfurization apparatus, and is repulped in the cooling and dust collecting column. In the dust slurry formed by feeding the dust containing Se into the liquid in the cooling and dust collecting column and repulping, a treating agent for making tetravalent Se insoluble is mixed. Accordingly, at least tetravalent Se components of Se components contained in the combustion exhaust gas are directly made insoluble by the treating agent in the desulfurization apparatus, and discharged into the solid-phase side by separating means (into the dust cake), or are easily made insoluble by addition of insoluble treating agent in the subsequent treatment of the separated water, so as to be discharged. If hexavalent Se components are contained in the Se components in the combustion exhaust gas, most of hexavalent Se components react with sulfurous acid absorbed from the combustion exhaust gas into the liquid in the cooling and dust collecting column to changed to reduced tetravalent Se combustion exhaust gas are directly made insoluble by the treating agent in the desulfurization apparatus, and discharged to the solid-phase side (in the dust cake) by the separating means for separating the dust slurry into solid and liquid, or is easily made insoluble by the addition of insoluble treating agent in the subsequent treatment of separated water so as to be discarded. If hexavalent Se components are contained in the combustion exhaust gas, most of these hexavalent Se components react with the sulfurous acid absorbed from the combustion exhaust gas in the liquid in the cooling and dust collecting column to transform to reduced tetravalent Se, which is also made insoluble by the treating agent, and is discharged to the solid-phase side (in the dust cake) by the separating means, and is made harmless.

Therefore, in this treatment apparatus, too, the Se elution standard can be easily satisfied, and moreover since the desulfurization apparatus functions as the dust collector, reducing reaction apparatus of hexavalent Se, and repulping means of dust, the constitution of the entire apparatus may be further simplified, as compared with the constitution for installing the dust collector, repulping means and others separately. In addition, in this treatment apparatus, dust is not mixed into the slurry in the absorption column of the desulfurization apparatus, and the performance of the desulfurization apparatus such as desulfurization rate may be maintained high.

In the combustion exhaust gas treatment apparatus in a prior stage of treatment by solidifying the impurities in the wastewater treating device in the desulfurization apparatus, a treating agent for making tetravalent Se insoluble is added, and the Se eluting in the wastewater can be made insoluble to change into disposable form. In the combustion exhaust gas treatment apparatus of claims 1 to 9, Se in the combustion exhaust gas can be almost completely made insoluble, but this apparatus is effective in the case where Se is not to be made insoluble, for example, it is necessary to treat Se concentrated in the circulation, being dissolved in the absorption liquid slurry due to reduction of hexavalent Se, mixing of Se into the gypsum to be collected in the desulfurization process must be avoided. Depending on the conditions of treatment, the insoluble treating agent may be supplied only in the wastewater treating apparatus.

BRIEF DESCRIPTION OF THE DRAWINGS

Fig. 1 is a schematic structural diagram of a combustion exhaust gas treatment apparatus in embodiment 1 of the invention.

Fig. 2 is a more specific structural diagram of the constitution of the combustion exhaust gas treatment apparatus in Fig. 1.

Fig. 3 is a schematic structural diagram of a combustion exhaust gas treatment apparatus in embodiment 2 of the invention.

Fig. 4 is a schematic structural diagram of a combustion exhaust gas treatment apparatus in embodiment 3 of the invention.

Fig. 5 is a schematic structural diagram of a combustion exhaust gas treatment apparatus in embodiment 4 of the invention.

Fig. 6 is a schematic structural diagram of a combustion exhaust gas treatment apparatus in embodiment 5 of the invention.

Fig. 7 is a schematic structural diagram showing an example of a conventional combustion exhaust gas treatment apparatus.

Fig. 8 is a schematic structural diagram showing other example of a conventional combustion exhaust gas treatment apparatus.

Fig. 9 is a schematic structural diagram showing a different example of a conventional combustion exhaust gas treatment apparatus.

DETAILED DESCRIPTION OF THE PREFERRED EMBODIMENTS

Embodiments of the invention are described below while referring to the accompanying drawings.

(Embodiment 1)

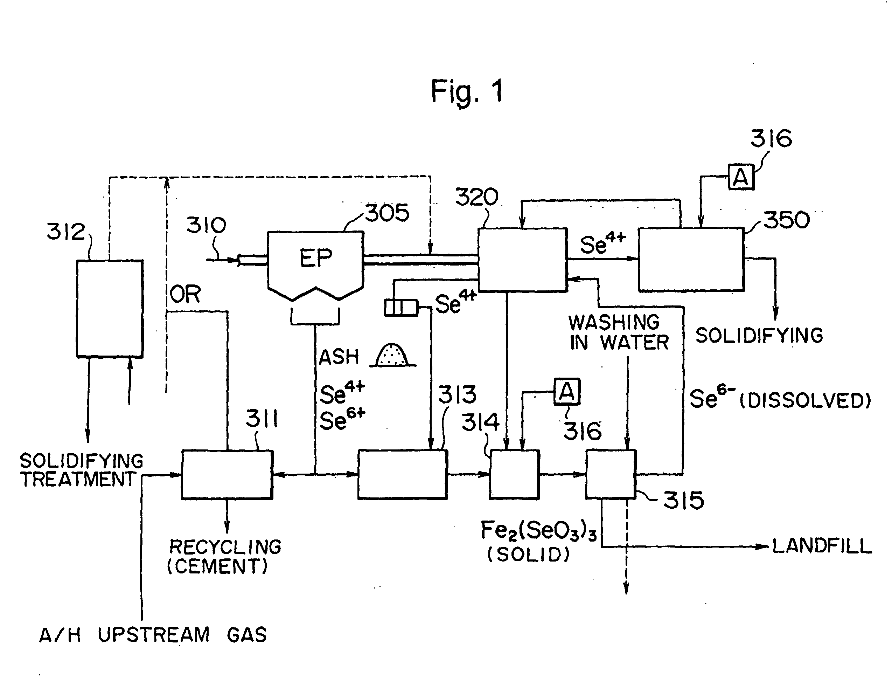

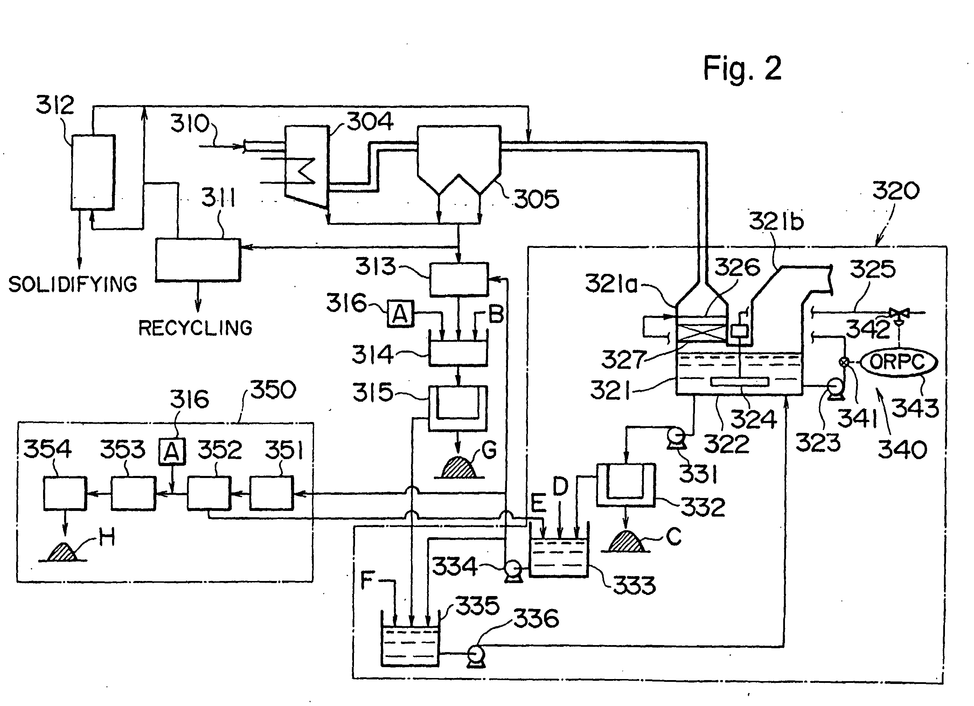

Fig. 1 is a schematic structural (principle) diagram showing an example of a combustion exhaust gas treatment apparatus of the invention and Fig. 2 is a structural diagram specifically showing the constitution of the combustion exhaust gas treatment apparatus. In the following explanation, the combustion exhaust gas to be treated is supposed to contain both hexavalent Se and tetravalent Se.

In the combustion exhaust gas treatment apparatus in the embodiment, as shown in Fig. 1, dust containing Se is removed from the combustion exhaust gas 310 by an electrostatic precipitator 305, and part of the dust (ash) removed by the electrostatic precipitator 305 is heated by heating means 311 making use of upstream gas of air heater or the like to sublimate Se in the dust (hexavalent Se and tetravalent Se), thereby adsorbing in an adsorption column 312.

On the other hand, the remaining dust is repulped (dissolved in water) by the liquid from a wet desulfurization apparatus 320 (ORP control: hereinafter desulfurization apparatus 320) by repulping means 313, and formed into slurry, and a treating agent A (such as $FeCl_3$) from treating agent feeding means 316 is charged by mixing means 314, and by separating into solid and liquid in separating means 315, tetravalent Se is solidified and separated into the solid-phase side. On the other hand, hexavalent Se dissolved in the liquid-phase side in the separating means 315 is led into the desulfurization apparatus 320, and nearly the whole volume is reduced by the so-called ORP control (oxidation-reduction potential control) to be transformed into tetravalent Se, thereby facilitating the treatment by making wastewater-free in the wastewater treating apparatus 350.

The heating means 311 is designed to heat the ash introduced from the electrostatic precipitator 305 up to a temperature for sublimating and gasifying hexavalent Se and tetravalent Se (100 to 1200°C, preferably 320 to 1000°C), and part of produced gas is led into the absorption column 312, and the rest is sent into the combustion exhaust gas feed-in side of the desulfurization apparatus 320. The ash left over in the heating means 311 is deprived of Se components, and is recycled as cement material. The adsorption column 312 is designed to absorb and capture part of Se in the produced gas from the heating means 311 so as to be solidified, and herein the gas containing Se which is not adsorbed is sent into the combustion exhaust gas feed-in side of the desulfurization apparatus 320.

To the repulping means 313, as shown in Fig. 2, the liquid in a filtrate tank 333 is supplied by means of a pump 334 of the desulfurization apparatus 320, and the dust introduced from the electrostatic precipitator 305 is made into slurry by this liquid. The mixing means 314 is, for example, composed of a mixing tank and an agitating mechanism for agitating the liquid in the mixing tank, and the dust slurry formed by the repulping means 313, the treating agent A from the treating agent feeding means 316, and, if necessary, a filter additive B are charged, and they are mixed and sent into the separating means 315 at the downstream side. As the treating agent A, a chemical reacting at least with tetravalent Se (main form: selenious acid $SeO_3^{2-}$) to make insoluble is needed, and, for example, $FeCl_3$ or $Fe_2(SO_4)_3$ may be used. As the filter additive B, a chemical large in particle size and having a function for supporting solid-liquid separation is desired, and, for example, gypsum (gypsum C produced in the desulfurization apparatus 320) may be used. The separating means 315 is, for example, a centrifugal setting machine, and, in this case, only the filtrate is returned to the absorbent slurry column 335 of the desulfurization apparatus 320.

The desulfurization apparatus 320 is of tank oxidation type, and comprises an absorption column 321 for feeding an absorbent slurry (composed of limestone in this example) into a bottom tank 322, a circulation pump 323 for sending the absorbent slurry in the tank 322 into an upper part 321a (combustion exhaust gas feed-in unit) of the absorption tank 321 to contact with the combustion exhaust gas, a rotary arm type air sparger 324 supported in the tank 322 for rotation horizontally by means of a motor not shown, and agitating the slurry in the tank 322 and blowing in the supplied air efficiently into the tank 322 as fine bubbles, and an air feed tube 325 for feeding air into this air sparger 324, and it is designed to obtain gypsum by totally oxidizing by efficient contact between air and the absorbent slurry absorbing sulfurous acid in the tank 322.

A slurry pump 331 for sucking out the slurry in the tank 322 is connected to the tank 322, and the slurry sucked out by this slurry pump 331 is concentrated through a thickener not shown, and is supplied into the solid-liquid separator 332 to be filtered, and the gypsum C in the slurry is taken out as solid cake (usually water content of about 10%). On the other hand, the separated water by the thickener and the filtrate (mainly water) from the solid-liquid separator 332 are once sent into the filtrate tank 333, and, as required, makeup water D or return liquid E from the wastewater treating apparatus 350 is added, and part of such liquid is sent into the absorbent slurry tank 335 by a pump 334, and mixed with limestone F ($CaCO_3$) supplied from a limestone silo not shown to be formed into an absorbent slurry, which is supplied again into the tank 322 by a slurry pump 336.

The desulfurization apparatus 320 is further provided with, as a preferred embodiment of the invention, oxidation-reduction reaction control means 340 for controlling the oxidation-reduction reaction in the absorption column 321. This oxidation-reduction reaction control means 340 is composed of a sensor 341 disposed in the discharge side piping of the circulation pump 323 for detecting the oxidation-reduction potential of the slurry in the tank 322, a flow rate control valve 342 disposed in the midst of the air feed tube 325 for adjusting the air feed rate into the air sparger 324, and a controller 343 for controlling the action of the flow rate control valve 342 on the basis of the detection output of the sensor 341. Herein, the sensor 341 is composed by immersing an electrode, for example, made of platinum into slurry. The controller 343 is designed to control the opening degree of the flow rate control valve 342 continuously, so that the air feed rate into the air sparger 324 may be a minimum required limit for oxidizing and digesting the sulfurous acid dissolved in the slurry from the combustion exhaust gas. For example, more specifically, on the basis of the correlation of the concentration of sulfurous acid and oxidation-reduction potential, the oxidation-reduction potential when the concentration of sulfurous acid is nearly zero is predetermined as the reference potential, and, by proportional control, when the oxidation-reduction potential detected by the sensor 341 becomes lower than this reference potential, the air feed rate is increased according to the deviation, and when the oxidation-reduction potential detected by the sensor 341 becomes higher than this reference potential, the air feed rate is decreased according to the deviation.

Incidentally, since the oxidation-reduction reaction control means 340 is designed to feed a minimum required limit for oxidizing the total volume of sulfurous acid, it eventually has a function of inducing a newly total reduction reaction of the other acids contained in the slurry by the sulfurous acid.

That is, in this case, as mentioned later, the slurry supplied into the tank 322 from the absorbent slurry tank 335 contains hexavalent Se (main form: selenic acid $SeO_4^{2-}$) , but by the control of the controller 343, it reacts with the sulfurous acid absorbed from the combustion exhaust gas to undergo reduction reaction to be transformed into tetravalent Se (main form: selenious acid $SeO_3^{2-}$), which takes place in the absorption column 321. This reaction is expressed in the following reaction formula (1).

$$SeO_4^{2-} + SO_3^{2-} \rightarrow SeO_3^{2-} + SO_4^{2-} \tag{1}$$

In this embodiment, the wastewater treating apparatus 350 is a so-called wastewater-free treating apparatus in a known constitution comprising a pretreatment facility 351, an electric dialysis facility 352, a secondary concentrating facility 353, and a solidifying facility 354. In this wastewater treating apparatus 350, part of the liquid in the filtrate tank 333 is supplied by the pump 334 of the desulfurization apparatus 320, and impurities in this liquid (for example, Se and Cl) are removed mainly by the function of the electric dialysis facility 352, and the residue after removal is returned to the filtrate tank 333 or absorbent slurry tank 335 of the desulfurization apparatus 320. The removed impurities are finally solidified in the solidifying facility 354, but at least prior to the solidifying process (for example, at a prior stage of the secondary concentrating facility 353), the treating agent A for reacting with tetravalent Se (main form: selenious acid $SeO_3^{2-}$) to make it insoluble is mixed into the removed impurities from the treating agent feeding means 316.

In thus constituted combustion exhaust gas treatment apparatus, first, the sulfurous acid in the combustion exhaust gas after removing the dust, and gasified Se are removed, and gypsum is produced and collected in the following procedure.

That is, the combustion exhaust gas introduced into the absorption column 321 (including the gas sent from the heating means 311) contacts with the absorbent slurry sprayed form a header pipe 326 by the circulation pump 323, and the sulfurous acid and gasified Se are absorbed and removed, and discharged as treated combustion exhaust gas from a combustion exhaust gas lead-out unit 321b.

The sulfurous acid absorbed in the absorbent slurry sprayed from the header pipe 326 and flowing down through a filler 327 is agitated by the air sparger 324 in the tank 322, and contacts with multiple bubbles to be oxidized, and further undergoes neutralization reaction to become gypsum. In the absorption column 321, by the reaction in the reaction formula (1), nearly whole volume of hexavalent Se (main form: selenic acid $SO_4^{2-}$) is transformed into tetravalent Se (main form: selenious acid $SO_3^{2-}$). Principal reactions taking place in this process (other than reaction formula are expressed in reaction formulas (2) to (4).

(Absorption column combustion exhaust gas lead-in part)

$$SO_2 + H_2O \rightarrow H^+ + HSO_3^- \tag{2}$$

(Tank)

$$H^+ + HSO_3^- + 1/2O_2 \rightarrow 2H^+ + SO_4^{2-} \tag{3}$$

$$2H^+ + SO_4^{2-} + CaCO_3 + H_2O \rightarrow CaSO_4 \cdot 2H_2O + CO_2 \tag{4}$$

Thus, in the tank 322, gypsum ($CaSO_4 \cdot 2H_2O$), a slight amount of limestone ($CaCO_3$), and tetravalent Se (main form: selenious acid $SeO_3^{2-}$) are suspended or dissolved, and they are sucked out by the slurry pump 331, and concentrated through a thickener not shown, and supplied into the solid-liquid separator 332 to be filtered, and gypsum C is obtained in a cake form of low water content (usually water content about 10%). At this time, meanwhile, tetravalent Se (main form: selenious acid $SeO_3^{2-}$), if not dissolved partly, may be slightly separated and mixed into the gypsum C, but is mostly sent into the filtrate tank 333 together with the separated water or filtrate.

Consequently, the dust removal treatment in the combustion exhaust gas and the treating action of Se contained much in the dust in this combustion exhaust gas treatment apparatus are explained below.

Part of dust (ash) removed by the electrostatic precipitator 305 is heated by the heating means 311 to be gasified, and is partly adsorbed and solidified as mentioned above, while the rest is sent and treated in the absorption column 321 of the desulfurization apparatus 320. On the other hand, the remainder of the dust removed by the electrostatic precipitator 305 is repulped (dissolved in water) in the liquid sent from the filtrate tank 333 of the desulfurization apparatus 320 by the repulping means 313 to be formed into slurry, and treating agent A and, if necessary, filter additive B are added and mixed by the mixing means 314.

At this time, in the mixing means 314, the tetravalent Se (main form: selenious acid $SeO_3^{2-}$) contained in the slurry formed by the repulping means 313 (dust slurry) reacts with the treating agent A (e.g. FeCl, or $Fe_2(SO_4)_3$) in the following reaction formulas (5), (6), or (7), (8), and becomes insoluble in a form of iron selenite ($Fe_2(SeO_3)_3$).

$$FeCl_3 \rightarrow Fe_3^+ + 3Cl^- \tag{5}$$

$$2Fe^{3+} + 3SeO_3^{2-} \rightarrow Fe_2(SeO_3)_3 \downarrow \tag{6}$$

or

$$Fe_2(SO_4)_3 \rightarrow 2Fe^{3+} + 3SO_4^{2-} \qquad (7)$$

$$2Fe^{3+} + 3SeO_3^{2-} \rightarrow Fe_2(SeO_3)_3 \downarrow \qquad (8)$$

Accordingly, when the dust slurry is separated into solid and liquid by the separating means 315, the tetravalent Se is separated in the solid-phase side as iron selenite, and mixed in insoluble form into the dust cake G discharged from the separating means 315. On the other hand, the hexavalent Se in the dust slurry is dissolved in the liquid-phase side and is contained in the filtrate, and is mixed, in this case, into the absorbent slurry tank 335 of the desulfurization apparatus 320. In the separating means 315, by the function of the filter additive B (gypsum, etc.) charged in the mixing means 314, effective dehydration is realized, and a low water content in the dust cake G is achieved. At the same time, the hexavalent Se contained in the filtrate in the separating means 315 and mixed in the adsorbent slurry tank 335 of the desulfurization apparatus 320 is also contained in the absorbent slurry and sent into the absorption column 321 of the desulfurization apparatus 320 with the pump 336, and therefore almost all volume thereof is transformed into tetravalent Se in the reaction (reaction formula (1).

The function of the wastewater treating apparatus 350 in this combustion exhaust gas treatment apparatus is described below. As mentioned above, mainly hexavalent Se is sequentially mixed into the slurry solution circulating in the desulfurization apparatus 320 as being contained in the separated water of the dust slurry, and when this hexavalent Se enters the absorption column 321, it is almost completely transformed into tetravalent Se by the above reaction (reaction formula 1), and in stationary state, therefore, much tetravalent Se mainly formed by reduction of hexavalent Se is present in the slurry solution circulating in the desulfurization apparatus 320. In this case, the wastewater treating apparatus 350 functions to remove this tetravalent Se, like other impurities (e.g. C1), so as not to be accumulated excessively in the slurry solution circulating in the desulfurization apparatus 320.

That is, in the wastewater treating apparatus 350, part of the slurry solution circulating in the desulfurization apparatus 320 is extracted from the discharge side of the pump 334, and the impurities in this solution (Se, Cl, etc.) are removed mainly by the function of the electric dialysis facility 352, and returned to the filtrate tank 333 of the desulfurization apparatus 320. The removed impurities are mixed with the treating agent A charged from the treating agent feeding means 316, and concentrated in the secondary concentration apparatus 353, solidified by the solidifying facility 354, and discarded in the ash disposal yard or the like as impurity chip H. At this time, the tetravalent se in the impurities reacts with the treating agent A in the formulas (5), (6), or (7), (8), and is transformed into iron selenite ($Fe_2(SeO_3)_3$), and is present in an insoluble form in the impurity chip H.

As described herein, according to the combustion exhaust gas treatment apparatus of the embodiment, together with the conventional purification of combustion exhaust gas (removal of dust, removal of sulfurous acid), Se in the combustion exhaust gas is removed along with dust, and finally it is contained, in an insoluble form, in the dust cake G or impurity chip H, so as to be discarded. Moreover, hexavalent Se which is hard to be treated (made insoluble) is transformed into tetravalent Se which is easy to discard, by the treating agent by the oxidation-reduction reaction control means 340 in the absorption column 321 of the desulfurization apparatus 320, and therefore, as compared with the apparatus comprising an independent reaction column for transforming hexavalent Se into tetravalent Se, for example, Se in combustion exhaust gas may be removed and made harmless easily and inexpensively.

Still more, as the solvent for repulping the dust captured by the electrostatic precipitator 305 by the repulping means 313, by using part of the circulation liquid of the desulfurization apparatus 320, the water flow (circulation volume) and consumption are saved as compared with the apparatus of feeding water separately into the repulping means 313, and the running cost of the apparatus is curtailed, and at the same time the required capacity of the wastewater treating apparatus 350 is decreased, so that the facility cost may be further reduced.

When the mixing means 314 is designed to charge filter additive B, the dehydration rate is heightened in the separating means 315, and dust cake G of lower water content is formed, so that carrying or handling of dust cake G may be easier.

Moreover, according to this combustion exhaust gas treatment apparatus, by the function of the oxidation-reduction reaction control means 340, nearly all of hexavalent Se is eventually transformed into tetravalent Se, and is made insoluble and discarded, and hence the concentration of hexavalent Se remaining in the dust cake G or impurity chip H (not made insoluble) is very slight, and the elution standard is satisfied with a sufficient margin.

(Embodiment 2)

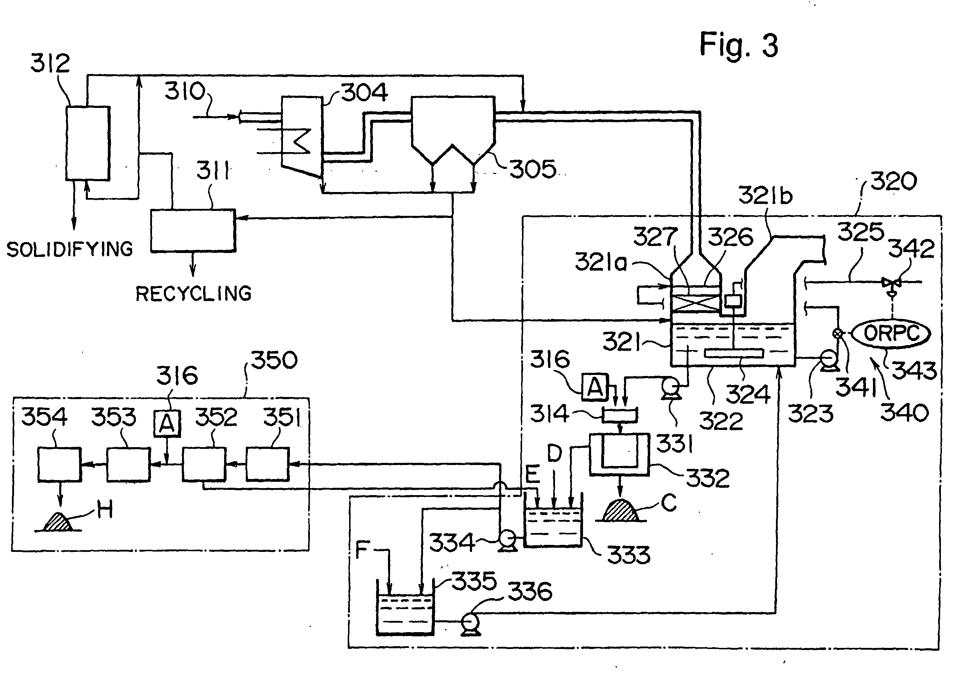

Fig.3 is a schematic structural diagram showing an example of a combustion exhaust gas treatment apparatus of the invention. Same constituent elements as in embodiment 1 are identified with same reference numerals, and their explanations are omitted. In the combustion exhaust gas treatment apparatus of the embodiment, as shown in Fig. 3, the dust captured by the electrostatic precipitator 305 is directly introduced into the absorption column 321 of the desulfurization apparatus 320, and the treating agent A is charged into the slurry extracted from the absorption column 321 of the desulfurization apparatus 320 by the treating agent feeding means 316 in the mixing means 314.

In this case, all Se in the dust once enters the absorption column 321 except for the portion extracted by the heating means 311, and in the absorption column 321, too, the hexavalent Se is transformed into tetravalent Se, and this tetravalent Se is made insoluble by the treating agent A, and is mixed into the gypsum C or the impurity chip H in the wastewater treating apparatus 350. Herein, the absorption column 321 also functions as the repulping means 313 in embodiment 1 and the solid-liquid separator 332 also functions as the separating means 315 in embodiment 1, and as compared with the apparatus in embodiment 1, therefore, the repulping means 313 and separating means 315 are not necessary, thereby contributing further to reduction of the facility cost.

In this embodiment, meanwhile, although the cost may be further saved as compared with embodiment 1, but due to the effect of massive dust (impurities) mixing into the absorption column, it may be difficult to keep a high desulfurization rate or high quality of gypsum C, and where this problem is feared, embodiment 1 or embodiment 4 or 5 mentioned later may be preferable, and in this respect the constitution of embodiment 1 is superior. Incidentally, the treating agent A may be mixed into other position than the position shown in Fig. 3, as far as within the slurry apparatus of the desulfurization apparatus 320, or may be directly mixed into the absorption column 321.

(Embodiment 3)

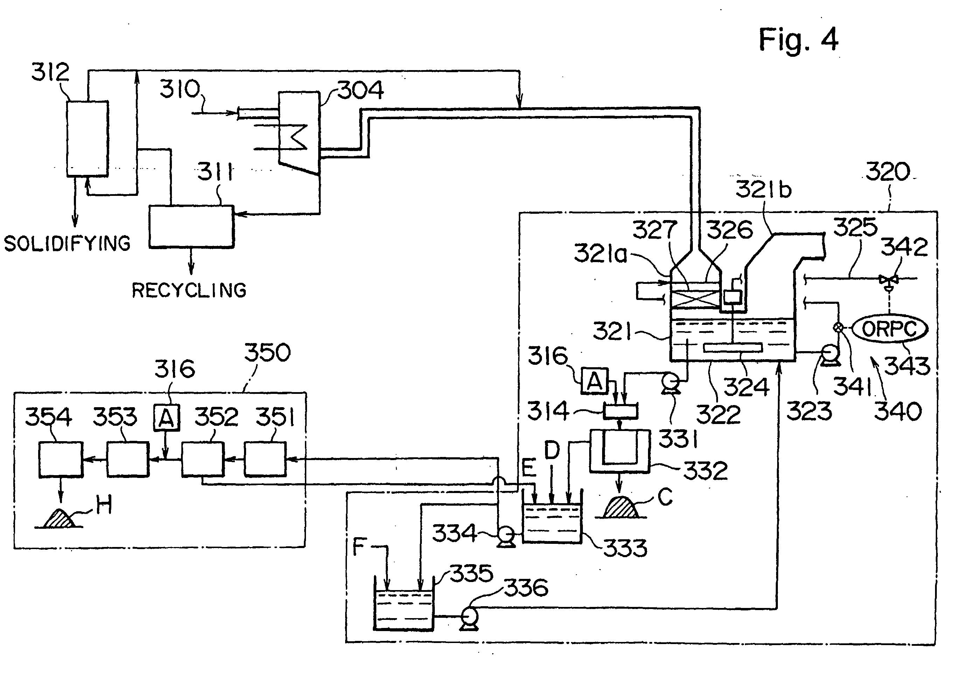

Fig. 4 is a schematic structural diagram showing an example of a combustion exhaust gas treatment apparatus of the invention. Same constituent elements as in embodiment 1 are identified with same reference numerals, and their explanations are omitted. In the combustion exhaust gas treatment apparatus of the embodiment, as shown in Fig. 4, without installing electrostatic precipitator 305, combustion exhaust gas is directly fed into the absorption column 321 of the desulfurization apparatus 320, together with fly ash and dust, and the treating agent A is charged into the slurry extracted from the absorption column 321 of the desulfurization apparatus 320 from the treating agent feeding means 316 in the mixing means 314.

In this case, all Se in the dust once enters the absorption column 321, and in the absorption column 321, the hexavalent Se is transformed into tetravalent Se, and this tetravalent Se is made insoluble by the treating agent A, and is mixed into the gypsum C or the impurity chip H in the wastewater treating apparatus 350. Herein, the absorption column 321 also functions as the electrostatic precipitator 305 and repulping means 313 in embodiment 1, and the solid-liquid separator 332 also functions as the separating means 315 in embodiment 1, and as compared with the apparatus in embodiment 1, therefore, the electrostatic precipitator 305, repulping means 313 and separating means 315 are not necessary, thereby contributing further to reduction of the facility cost.

In this embodiment, meanwhile, although the cost may be further saved as compared with embodiment 1, but due to the effect of massive dust (impurities) mixing into the absorption column, it may be difficult to keep a high desulfurization rate or high quality of gypsum C, and where this problem is feared, embodiment 1 or embodiment 4 or 5 mentioned later may be preferable, and in this respect the constitution of embodiment 1 is superior.

Yet, since the electrostatic precipitator 305 is not provided, the byproduct obtained in the heating means 311 is slight, and where this problem is feared, the constitution of embodiment 1, 2 or 4 may be preferred, and in this respect the constitution of embodiment 1 or other may be superior. In this constitution, too, the mixing position of the treating agent A is not limited to the position shown in Fig. 4, but it may be mixed in any arbitrary position in the slurry apparatus of the desulfurization apparatus 320, or may be directly charged into the absorption column 321.

(Embodiment 4)

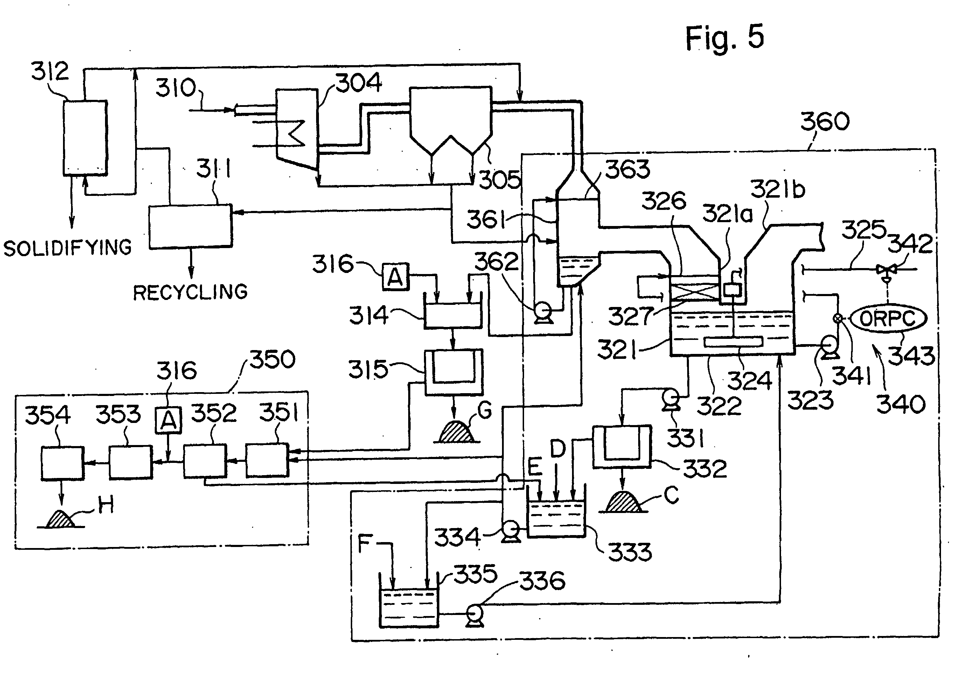

Fig. 5 is a schematic structural diagram showing an example of a combustion exhaust gas treatment apparatus of the invention. Same constituent elements as in embodiment 1 are identified with same reference numerals, and their explanations are omitted. In the combustion exhaust gas treatment apparatus of the embodiment, as shown in Fig. 5, a desulfurization apparatus 360 having a cooling and dust collecting column 361 for cooling the dust and removing dust is disposed at the upstream side of the absorption column 321, and the dust captured by the electrostatic precipitator 305 is directly fed into the cooling and dust collecting column 361 of the desulfurization apparatus 360, while the treating agent A is charged into the slurry extracted from the cooling and dust removing column 361 from the treating agent feeding means 316 in the mixing means 314. Herein, in the cooling and dust collecting column 361, the liquid from the filtrate tank 333 is supplied from the pump 334, and this liquid is sprayed from an upper header pipe 363 by a circulation pump 362. Between the cooling and dust collecting column 361 and absorption column 321, a mist eliminator, not show, is provided.

In this case, all Se in dust once gets into the cooling and dust removing column 361, and the reaction in (reaction formula (1)) occurs in the cooling and dust collecting column 361, and hexavalent Se is almost totally transformed into tetravalent Se, and this tetravalent Se is made insoluble by the treating agent A, and is mixed into the dust cake G or impurity chip H. Herein, the cooling and dust collecting column 361 also functions as the repulping means 313 in embodiment 1, and therefore the repulping means 313 is not needed as compared with embodiment 1, and the facility cost may be reduced.

In this embodiment, moreover, different from embodiments 1 to 3, massive dust does not mix into the absorption column 321, and therefore the facility cost may be further reduced, and the high desulfurization rate may be kept and gypsum C of high quality may be realized.

In Fig. 5, meanwhile, the separated water of the separating means 315 is directly fed into the wastewater treating apparatus 350, but for further perfect transformation reaction from hexavalent Se into tetravalent Se, the separated water may be fed, for example, into the absorbent slurry tank 335 and then guided into the absorption column 321.

The treating agent A may be also charged directly into the cooling and dust collecting column 361.

(Embodiment 5)

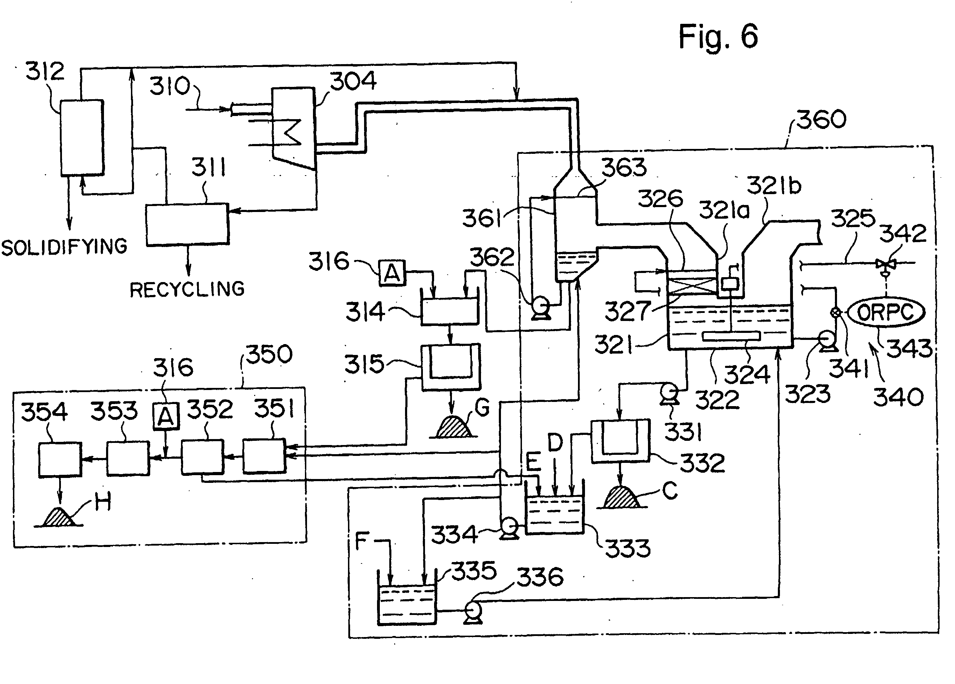

Fig. 6 is a schematic structural diagram showing an example of a combustion exhaust gas treatment apparatus of the invention. Same constituent elements as in embodiment 1 are identified with same reference numerals, and their explanations are omitted. In the combustion exhaust gas treatment apparatus of the embodiment, as shown in Fig. 6, a desulfurization apparatus 360 having a cooling and dust collecting column 361 for cooling the dust and removing dust'is disposed at the upstream side of the absorption column 321, and the combustion exhaust gas not being rid of dust is directly fed into the cooling and dust collecting column 361 of the desulfurization apparatus 360, while the treating agent A is charged into the slurry extracted from the cooling and dust removing column 361 from the treating agent feeding means 316 in the mixing means 314.

In this case, all Se in dust once gets into the cooling and dust removing column 361, and the reaction in (reaction formula (1)) occurs in the cooling and dust collecting column 361, and hexavalent Se is almost totally transformed into tetravalent Se, and this tetravalent Se is made insoluble by the treating agent A, and is mixed into the dust cake G or impurity chip H. Herein, the cooling and dust collecting column 361 also functions as the electrostatic precipitator 305 and repulping means 313 in embodiment 1, and therefore the electrostatic precipitator 305 and repulping means 313 are not needed as compared with embodiment 1, and the facility cost may be reduced.

In this embodiment, moreover, different from embodiments 2 and 3, massive dust does not mix into the absorption column 321, and therefore the facility cost may be further reduced, and the high desulfurization rate may be kept and gypsum C of high quality may be realized.

In Fig. 6, meanwhile, the separated water of the separating means 315 is directly fed into the wastewater treating apparatus 350, but for further perfect transformation reaction from hexavalent Se into tetravalent Se, the separated water may be fed, for example, into the absorbent slurry tank 335 and then guided into the absorption column 321.

Yet, since the electrostatic precipitator 305 is not provided, the byproduct obtained in the heating means 311 is slight, and where this problem is feared, the constitution of embodiment 1, 2 or 4 may be preferred, and in this respect the constitution of embodiment 1 or other may be superior.

The invention may be also realized in many other forms aside from the foregoing embodiments. For example, if hexavalent Se does not exist and only tetravalent Se is present in the combustion exhaust gas, the process or apparatus for reducing hexavalent Se into tetravalent Se is not needed. The process and apparatus for heating and recycling part of the dust removed by the dust collector by heating means may be provided only where necessary.

The constitution of the desulfurization apparatus is not limited to the tank oxidation type shown in the embodiments, and, for example, an oxidation column in which the slurry extracted from the absorption column is fed may be separately installed, and by blowing air into this oxidation column, final oxidation-reduction reaction may be performed herein. In this case, too, hexavalent Se is transformed into tetravalent Se in the absorption column or oxidation column.

The repulping means and mixing means in embodiment 1 are not always required to be composed of independent tank, but, for example, it may be also designed to repulp the dust and mix the treating agent in one tank (that is, the repulping means and mixing means of the invention may be composed of a single tank).

In embodiments 2 to 5, the charging position of the treating agent A may be a position in the wastewater treating apparatus 350. That is, since the slurry liquid in the absorption column or cooling and dust collecting column of the desulfurization apparatus is circulating in the wastewater treating apparatus 350, the entire Se can be made insoluble by charging the treating agent only in the wastewater treating apparatus 350.

EFFECTS OF THE INVENTION

According to the combustion exhaust gas treatment apparatus of the invention, if hexavalent Se is contained in the combustion exhaust gas, all Se (both hexavalent and tetravalent) removed from the combustion exhaust gas as dust can be finally discharged as tetravalent Se, and the Se elution standard may be satisfied easily only by treating with the treating agent to be insoluble, and the absorption column of the desulfurization apparatus also functions as the reduction reaction facility of hexavalent Se, and the facility constitution of the entire apparatus is facilitated as compared with the constitution of installing an independent reaction column for reducing Se.

According to the combustion exhaust gas treatment apparatus of the invention, since part of the circulation liquid of the desulfurization apparatus can be used as solvent in the repulping means, the water flow (circulation) and consumption can be saved as compared with the constitution for feeding water separately.

According to the combustion exhaust gas treatment apparatus of the invention, since filter additive is charged into the mixing means or separating means, the dehydration performance in the separating means is enhanced, the solid matter (dust cake) of low water content and easy to handle is obtained.

According to the combustion exhaust gas treatment apparatus of the invention, the Se elution standard may be easily satisfied, and the desulfurization apparatus functions also as hexavalent Se reduction reaction facility or as dust repulping means, so that the constitution of the entire apparatus is simplified as compared with the apparatus comprising Se reduction reaction column or repulping means separately.

According to the combustion exhaust gas treatment apparatus of the invention, the Se elution standard may be easily satisfied, and the desulfurization apparatus functions also as dust collector, or hexavalent Se reduction reaction facility, or dust repulping means, so that the constitution of the entire apparatus is simplified as compared with the apparatus comprising dust collector, Se reduction reaction column or repulping means separately.

According to the combustion exhaust gas treatment apparatus of the invention, the oxidation-reduction reaction control means controls the oxidation-reduction reaction of the slurry in the desulfurization apparatus, so that the hexavalent Se mixed in the slurry in the desulfurization apparatus may be almost completely reduced into tetravalent form by the sulfurous acid in the slurry. Accordingly, if hexavalent Se is contained in the combustion exhaust gas, this hexavalent Se can be almost completely transformed into tetravalent form in the desulfurization apparatus, so that the Se in the combustion exhaust gas may be made insoluble more easily and perfectly.

According to the combustion exhaust gas treatment apparatus of the invention, the Se elution standard may be easily satisfied, and moreover since the desulfurization apparatus functions also as hexavalent Se reducing reaction facility, the constitution of the entire apparatus is simplified as compared with the apparatus comprising reaction column for reducing Se separately. Also in this case, since the cooling and dust removing column also function as dust repulping means, the constitution of the entire apparatus is more simplified as compared with the apparatus comprising repulping means separately. More preferably, since much dust (Se and other impurities) does not mix into the slurry in the absorption column of the desulfurization apparatus, the performance such as desulfurization rate in the desulfurization apparatus can be maintained high.

According to the combustion exhaust gas treatment apparatus of the invention, the Se elution standard may be easily satisfied, and the desulfurization apparatus functions also as dust collector, or hexavalent Se reduction reaction facility, or dust repulping means, so that the constitution of the entire apparatus is simplified as compared with the apparatus comprising dust collector, Se reduction reaction column or repulping means separately. More preferably, since much dust (Se and other impurities) does not mix into the slurry in the absorption column of the desulfurization apparatus, the performance such as desulfurization rate in the desulfurization apparatus can be maintained high.

According to the combustion exhaust gas treatment apparatus of the invention, the Se eluting into wastewater in the desulfurization apparatus can be also made insoluble, and more perfect Se insoluble treatment is realized, and Se-free gypsum can be collected. Depending on the treating conditions, moreover, the insoluble treating agent may be charged only into the wastewater treating apparatus, so that the entire apparatus can be simplified.

**Claims**

1. Combustion exhaust gas treatment apparatus for treating combustion exhaust gas (310) containing sulfurous acid, dust and Se components, comprising

   a dust collector (305, 321, 361) for removing dust in the combustion exhaust gas (310),
   a desulfurization apparatus (320, 360) downstream of the dust collector (305, 321, 361) having an absorption/desulfurization column (321) in which an absorbent slurry for absorbing and removing sulfurous acid in the combustion exhaust gas circulates,
   means (313, 321) for introducing the dust removed by the dust collector (305, 321, 361) into the circulating absorbent slurry, and

a treating agent feeding means (316) for feeding a treating agent (A) into the absorbent slurry for making tetravalent Se insoluble.

2. Combustion exhaust gas treatment apparatus of claim 1, wherein the dust collector is a dry dust collector (305) separate from the desulfurization apparatus (320).

3. Combustion exhaust gas treatment apparatus of claim 2, wherein the desulfurization apparatus (320) includes a cooling and dust collecting column (361) disposed upstream of the absorption/ desulfurization column (321) and wherein the combustion gas is introduced into the dry dust collector (305).

4. Combustion exhaust gas treatment apparatus of claim 1, wherein the desulfurization apparatus (360) includes a cooling and dust collecting column (361) disposed upstream of the absorption/desulfurization column (321) and wherein the combustion exhaust gas is introduced into the cooling and dust collecting column.

5. Combustion exhaust gas treatment apparatus of claim 1 or 2, further comprising repulping means (313) for dispersing the dust removed by the dry dust collector (305) in water to form a slurry, the treating agent feeding means (316) feeding the treating agent into the dust slurry obtained in the repulping means (313), for making tetravalent Se insoluble, separating means (315) for separating the dust slurry into solid and liquid, and a piping system for introducing the liquid portion from the separating means into the circulating absorbent slurry.

6. Combustion exhaust gas treatment apparatus of claim 5, wherein a part of the absorbent liquid circulating in the form of the slurry in the desulfurization apparatus (320, 360) is introduced into the repulping means (313) and is used as solvent therein.

7. Combustion exhaust gas treatment apparatus of claim 5 or 6, further comprising means for feeding filter additive agent (B) into the dust slurry.

8. Combustion exhaust gas treatment apparatus of any one of claims 1 to 7, further comprising oxidation-reduction reaction control means (340) for controlling the oxidation-reduction reaction in the desulfurization apparatus (320), so that the hexavalent Se in the slurry in the desulfurization apparatus may be reduced by the sulfurous acid in the slurry to tetravalent Se.

9. Combustion exhaust gas treatment apparatus of any one of claims 1 to 8 further comprising a wastewater treatment apparatus (350) for treating wastewater from the desulfurization apparatus (320), and treating agent feeding means (316) for feeding a treating agent into the impurity slurry separated by this wastewater treatment apparatus (350), for making tetravalent Se insoluble.

**Patentansprüche**

1. Verbrennungsabgasbehandlungsvorrichtung zur Behandlung eines Verbrennungsabgases (310), das schweflige Säure, Staub und Selenbestandteile enthält, umfassend

einen Staubabscheider (305, 321, 361) zur Abscheidung von Staub aus dem Verbrennungsabgas (310), eine dem Staubabscheider (305, 321, 361) nachgeschaltete Entschwefelungseinrichtung (320, 360) mit einer Absorptions- und Entschwefelungssäule (321), in der eine Absorptionsaufschlämmung zur Absorption und Abscheidung von schwefliger Säure aus dem Verbrennungsabgas zirkuliert, einer Einrichtung (313, 321) zum Eintragen von von der Staubabscheideeinrichtung (305, 321, 361) abgeschiedenem Staub in die zirkulierende Absorptionsaufschlämmung, und einer Behandlungsmittel - Einspeiseeinrichtung (316) zum Einspeisen eines Behandlungsmittels (A) in die Absorptionsaufschlämmung, um tetravalentes Selen unlöslich zu machen.

2. Verbrennungsabgasbehandlungsvorrichtung nach Anspruch 1, bei der der Staubabscheider ein Trockenstaubabscheider (305) ist.

3. Verbrennungsabgasbehandlungsvorrichtung nach Anspruch 2, bei der die Entschwefelungseinrichtung (320) ferner eine der Absorptions- und Entschwefelungssäule (321) vorgeschaltete Kühl- und Staubabscheidesäule (361) aufweist und bei der das Verbrennungsabgas in den Trockenstaubabscheider eingeführt wird.

4. Verbrennungsabgasbehandlungsvorrichtung nach Anspruch 1, bei der die Entschwefelungseinrichtung (360) ferner eine der Absorptions- und Entschwefelungssäule (321) vorgeschaltete Kühl- und Staubabscheidesäule (361) aufweist und bei der das Verbrennungsabgas in die Kühl- und Staubabscheidesäule eingeführt wird.

5. Verbrennungsabgasbehandlungsvorrichtung nach Anspruch 1 oder 2, weiterhin umfassend

   eine Dispergiereinrichtung (313) zum Dispergieren des von dem Trockenstaubabscheider (305) abgeschiedenen Staubs in Wasser für die Erzeugung einer Staubaufschlämmung, wobei mit der Behandlungsmitteleinspeise - Einrichtung (316) das Behandlungsmittel in die in der Dispergiereinrichtung (313) erzeugte Staubaufschlämmung eingespeist wird, um tetravalentes Selen unlöslich zu machen,
   eine Trenneinrichtung (315) zum Auftrennen der Staubaufschlämmung in Feststoff und Flüssigkeit, und
   ein Rohrleitungssystem, um den Flüssigkeitsanteil der Trenneinrichtung in die zirkulierende Absorptionsaufschlämmung einzuleiten.

6. Verbrennungsabgasbehandlungsvorrichtung nach Anspruch 5, bei der ein Teil der in der Form einer Aufschlämmung in der Entschwefelungseinrichtung (320, 360) zirkulierenden Absorptionsflüssigkeit in die Dispergiereinrichtung (313) eingeleitet wird und darin als Lösungsmittel verwendet wird.

7. Verbrennungsabgasbehandlungsvorrichtung nach Anspruch 5 oder 6, die ferner eine Einrichtung zur Zugabe eines Filterhilfsmittels (B) in die Staubaufschlämmung umfasst.

8. Verbrennungsabgasbehandlungsvorrichtung nach einem der Ansprüche 1 bis 7, die ferner eine Einrichtung zur Regelung der O-xidations - Reduktions - Reaktion (340) für die Regelung der Oxydations - Reduktion - Reaktion in der Entschwefelungseinrichtung umfasst, so dass das hexavalente Selen in der Aufschlämmung der Entschwefelungseinrichtung von der in der Aufschlämmung enthaltenen schwefligen Säure zu tetravalentem Selen reduziert werden kann.

9. Verbrennungsabgasbehandlungsvorrichtung nach einem der Ansprüche 1 bis 8, die ferner umfasst

   eine Abwasser - Aufbereitungsanlage (350) zur Behandlung von Abwasser aus der Entschwefelungseinrichtung (320) und
   eine Behandlungsmittel - Einspeiseeinrichtung (316) zum Einspeisen eines Behandlungsmittels in die mit dieser Abwasser - Aufbereitungsanlage (350) abgetrennte, die Verunreinigungen enthaltende Aufschlämmung, um tetravalentes Selen unlöslich zu machen.

**Revendications**

1. Dispositif de traitement de gaz d'échappement de combustion pour traiter du gaz d'échappement de combustion (310) contenant de l'acide sulfureux, de la poussière et des composants à base de Se, comprenant

   un appareil de dépoussiérage (305, 321, 361) pour séparer la poussière du gaz d'échappement de combustion (310),
   un appareil de désulfuration (320, 360) disposé en aval de l'appareil de dépoussiérage (305, 321, 361) ayant une colonne d'absorption et de désulfuration (321) dans laquelle circule une suspension absorbante pour absorber et collecter l'acide sulfureux dans le gaz d'échappement de combustion,
   un moyen (313, 321) pour ajouter à la circulante suspension absorbante la poussière séparée par l'appareil de dépoussiérage (305, 321, 361), et
   un moyen d'alimentation d'un agent de traitement (316) pour ajouter à la circulante suspension absorbante un agent de traitement (A) pour rendre le Se tétravalent insoluble.

2. Dispositif de traitement de gaz d'échappement de combustion selon la revendication 1, dans lequel ledit appareil de dépoussiérage est un appareil de dépoussiérage à sec séparé de l'appareil de désulfuration (320).

3. Dispositif de traitement de gaz d'échappement de combustion selon la revendication 2, dans lequel l'appareil de désulfuration (320) comprend une colonne à refroidir et à collecter de la poussière (361) disposée en amont de la colonne d'absorption et de désulfuration (321) et dans laquelle le gaz de combustion est introduit dans l'appareil de dépoussiérage (305).

4. Dispositif de traitement de gaz d'échappement de combustion selon la revendication 1, dans lequel l'appareil de désulfuration (360) comprend une colonne à refroidir et à collecter de la poussière (361) disposée en amont de la colonne d'absorption et de désulfuration (321) et dans laquelle le gaz de combustion est introduit dans la colonne à refroidir et à collecter de la poussière (305).

5. Dispositif de traitement de gaz d'échappement de combustion selon la revendication 1 ou 2, comprenant de plus un moyen de disperser (313) pour disperser la poussière collectée par ledit appareil de dépoussiérage à sec (305) dans l'eau pour obtenir une suspension de poussière,
ledit moyen d'alimentation de l'agent de traitement (316) ajoutant l'agent de traitement à la suspension de poussière obtenue dans le moyen de disperser (313) pour rendre le Se tétravalent insoluble,
un moyen de séparation (315) pour séparer la suspension de poussière en une fraction de solide et une de liquide, et une tuyauterie pour introduire la fraction liquide du moyen de séparation dans la circulante suspension absorbante.

6. Dispositif de traitement de gaz d'échappement de combustion selon la revendication 5, dans lequel une partie de la circulante suspension absorbante en forme de la dispersion dans l'appareil de désulfuration (320, 360) est introduite dans le moyen de disperser (313) dans lequel elle est utilisée comme un solvant.

7. Dispositif de traitement de gaz d'échappement de combustion selon la revendication 5 ou 6, comprenant de plus un moyen pour alimenter un adjuvant de filtrage (B) à la suspension de poussière.

8. Dispositif de traitement de gaz d'échappement de combustion selon l'une quelconque des revendications 1 à 7, comprenant de plus un dispositif de réglage de la réaction de l'oxydation - réduction pour régler la réaction de l'oxydation - réduction dans l'appareil de désulfuration (340) de telle façon que le Se héxavalent dans la suspension de l'appareil de désulfuration peut être réduit au Se tétravalent par l'acide sulfureux dans la suspension.

9. Dispositif de traitement de gaz de combustion selon l'une quelconque des revendications 1 à 8, comprenant de plus un appareil de traitement des eaux usées (350) pour traiter des eaux usées de l' appareil de désulfuration et un moyen d'alimentation de'agent de traitement (316) pour ajouter un agent de traitement à la suspension polluée séparée par ledit appareil de traitement des eaux usées (350) pour rendre le Se tétravalent insoluble.

## Fig. 1

Fig. 2

# Fig. 3

EP 1 142 626 B1

Fig. 4

SOLIDIFYING

RECYCLING

ORPC

EP 1 142 626 B1

Fig. 5

Fig. 6

EP 1 142 626 B1

# Fig. 7

EP 1 142 626 B1

Fig. 8

Fig. 9